Europäisches Patentamt

European Patent Office

Office européen des brevets

(11) Numéro de publication: **0 354 822**
A1

## (12) DEMANDE DE BREVET EUROPEEN

(21) Numéro de dépôt: 89401736.7

(22) Date de dépôt: 20.06.89

(51) Int. Cl.5: **C 09 D 163/00**
C 09 D 133/10, C 09 D 5/00,
B 05 D 5/08

(30) Priorité: 29.06.88 FR 8808761

(43) Date de publication de la demande:
14.02.90 Bulletin 90/07

(84) Etats contractants désignés:
AT BE CH DE ES FR GB GR IT LI LU NL SE

(71) Demandeur: ATOCHEM
4 & 8, Cours Michelet La Défense 10
F-92800 Puteaux (FR)

(72) Inventeur: Perillon, Jean-Luc
18 lot, Bois Taillefer
F-27300 Bernay (FR)

(54) Compositions nouvelles de primaire d'adhérence pour revêtement fluoré à base de résines époxydes et méthacryliques, leur application pour le revêtement de substrats métalliques et procédé de fabrication desdits revêtements.

(57) L'invention concerne des compositions nouvelles de primaire d'adhérence pour revêtement fluoré. Le primaire d'adhérence est constitué essentiellement de résines époxydes et/ou époxy-phénoliques et de résine(s) méthacrylique(s).

L'invention a également pour objet des matériaux composites métal/revêtement fluoré ainsi qu'une technique de fabrication de ces matériaux.

Bundesdruckerei Berlin

## Description

### COMPOSITIONS NOUVELLES DE PRIMAIRE D'ADHERENCE POUR REVETEMENT FLUORE A BASE DE RESINES EPOXYDES ET METHACRYLIQUES, LEUR APPLICATION POUR LE REVETEMENT DE SUBSTRATS METALLIQUES ET PROCEDE DE FABRICATION DESDITS REVETEMENTS

La présente invention a pour objet de nouvelles compositions de primaire d'adhérence pour revêtement fluoré, c'est-à-dire à base de polymère(s) fluoré(s).

Les polymères fluorés sont largement utilisés pour le revêtement de substrats métalliques en raison notamment de leurs bonnes propriétés mécaniques telles qu'une bonne résistance à l'abrasion, au vieillissement et à de nombreux agents chimiques, une excellente stabilité thermique, une bonne imperméabilité aux gaz et aux liquides ainsi qu'une thermoplasticité permettant une mise en oeuvre facile. De plus, les revêtements à base de polymères fluorés ne sont pas toxiques et présentent un excellent aspect.

Mais il est d'autre part connu que les polymères fluorés présentent en général une incompatibilité avec les métaux, provoquant un délaminage rapide, et parfois brutal du revêtement fluoré.

Différentes compositions de primaire d'adhérence pour revêtement fluoré ont été proposées.

Dans le brevet français publié sous le numéro FR 2.179.422, on a décrit un procédé de revêtement de surfaces métalliques avec du polyfluorure de vinylidène (PVDF) à l'aide d'une couche de fond constituée par une dispersion de fluorure de polyvinyle.

Dans le brevet japonais publié sous le numéro 7789/82, on a proposé un revêtement de surface métallique résistant à la corrosion. Le substrat métallique est d'abord revêtu d'une sous-couche constituée essentiellement de PVDF et contenant de très faibles quantités de polytétrafluoroéthylène (PTFE) et d'un agent de réticulation.

Dans le brevet américain publié sous le numéro US 4.379.885, on a décrit un primaire d'adhérence obtenu par dispersion d'une résine fluorocarbonée dans un mélange de résines époxydes et méthacryliques qui convient pour des revêtements fluorocarbonés.

Bien que les primaires cités précédemment assurent une certaine adhérence du revêtement fluoré sur le substrat métallique, la présence de PVDF dans les compositions de ces primaires reste nuisible et le phénomène de délaminage, même s'il est retardé, se produit tôt ou tard.

La présente invention concerne un primaire d'adhérence pour revêtement fluoré, constitué essentiellement d'un mélange de résines époxydes et/ou époxy-phénoliques et de résine(s) méthacrylique(s).

Au sens de l'invention le terme "essentiellement" signifie un mélange ne renfermant pas de monomère ou de polymère fluoré autrement qu'à l'état de traces ou de sous-produits d'additifs éventuellement utilisés dans la composition de primaire d'adhérence conforme à l'invention.

Le primaire adhère très fortement au substrat métallique sans risque de délaminage.

D'autre part le primaire d'adhérence selon l'invention assure un très bon ancrage mécanique du revêtement superficiel contenant le(s) polymère(s) fluoré(s) sur le substrat métallique préalablement enduit de primaire.

Lorsque l'enduction et la cuisson du substrat sont terminées, le revêtement se révèle être de très bonne qualité, de bel aspect et de longue durée. Il résiste particulièrement bien à la corrosion, à l'abrasion, à de nombreux agents chimiques, au vieillissement et ne présente pas l'inconvénient du délaminage.

Les résines époxydes qui entrent dans la composition des primaires d'adhérence selon l'invention, peuvent être indifféremment choisies parmi les différentes familles de résines époxydes thermodurcissables.

Parmi ces résines époxydes, on citera tout particulièrement la famille des diglycidyléthers de bisphénol A et les époxy-phénol novolaques.

Par résine méthacrylique thermoplastique, on désigne le produit résultant de la (co)polymérisation ou du mélange de méthacrylate de méthyle (présent majoritairement) et de un ou plusieurs (méth)acrylates d'alkyles ayant de 1(2) à 12 atomes de carbone dans le groupement alkyle du monomère.

A titre d'illustration avantageuse, on peut citer les copolymères MMA/acrylate d'éthyle particulièrement convenables pour la réalisation de primaire d'adhérence selon l'invention.

Les compositions de primaire d'adhérence selon l'invention contiennent un mélange de résine(s) époxyde(s) et de résine(s) méthacrylique, ledit mélange contenant de 2 à 95 % en poids de résine(s) méthacrylique(s) et contenant de préférence de 3 à 25 % en poids de résine(s) méthacrylique(s).

A la composition de primaire contenant le mélange décrit ci-dessus, on peut incorporer divers autres constituants tels que des charges, des pigments, des agents de durcissement ou de réticulation.

A titre d'exemple de charges qui peuvent entrer dans la composition de primaire, on peut citer la silice, le talc.

A titre d'exemple de pigments, on peut citer le bioxyde de titane, le chromate de strontium, le phosphate de zinc, le silicochromate de plomb, le chromate de zinc.

A tire d'exemple d'agents de durcissement ou de réticulation, on peut citer les composés isocyanates, des résines phénoliques éthérifiées, le dicyandiamide, les polyacides.

Il est possible d'incorporer au mélange constitué de résine(s) époxydes et/ou époxy-phénoliques et de résine(s) méthacrylique(s) jusqu'à 200 % en poids de divers constituants choisis parmi ceux décrits ci-dessus et dont les proportions respectives restent dans les limites habituellement rencontrées dans le domaine des compositions de primaire.

L'invention a également pour objet des matériaux composites ou complexes comprenant un substrat métallique et un revêtement fluoré, pour lesquels l'association métal/revêtement fluoré est particulièrement solide.

Les matériaux composites selon l'invention comprennent successivement :
- un substrat métallique
- une ou plusieurs couches de primaire d'adhérence tel que défini précédemment
- une ou plusieurs couches de revêtement superficiel fluoré

Le substrat métallique peut être choisi dans une large gamme de produits. Il peut s'agir de pièces d'acier ordinaire ou galvanisé, de pièces en aluminium ou en alliage d'aluminium, les pièces en acier étant plus particulièrement visées pour l'invention.

Bien que l'épaisseur du substrat métallique ne soit pas critique en elle-même, elle se situera le plus souvent entre 0,7 et 3 mm.

Selon une technique connue et qui ne constitue pas en elle-même un objet de l'invention, le substrat métallique, présent dans les maté riaux conformes à l'invention a pu subir un ou plusieurs traitements de surface suivants, cette liste n'étant pas limitative :
- dégraissage alcalin
- dégraissage par solvants tels que le trichloroéthylène
- brossage
- grenaillage
- rinçage à chaud
- phosphatation
- chromatation
- rinçage à froid
- rinçage chromique

Le primaire d'adhérence est tel que décrit précédemment ; il est constitué essentiellement d'un mélange d'une ou plusieurs résine(s) époxyde(s) et de résine(s) méthacrylique(s).

Le revêtement superficiel "fluoré" contient un ou plusieurs polymères fluorés qui peuvent être choisis parmi les différentes familles de polymères fluorés. On peut citer le polyfluorure de vinyle (PVF), le PVDF, le polychlorotrifluoroéthylène (PCTFE), le PTFE ainsi que leurs copolymères.

Parmi ces polymères fluorés, on citera tout particulièrement le PVDF et ses copolymères.

L'invention concerne également un procédé de fabrication de matériaux composites comprenant un substrat métallique, un primaire d'adhérence et un revêtement superficiel "fluoré".

Ce procédé consiste à déposer sur le substrat métallique qui a pu, le cas échéant, subir l'un ou l'autre des traitements de surface énumérés précédemment une ou plusieurs couches de primaire sous forme de poudre, de suspension ou de solution.

Le dépôt de la composition de primaire peut être effectué à température ambiante.

l'épaisseur de la couche de primaire appliquée en solution ou en suspension, peut être avantageusement comprise entre 3 et 40 µm, et de préférence entre 8 et 25 µm.

Lorsque le primaire est déposé en solution ou en suspension, les solvants utilisés sont en général choisis parmi les solvants usuels. A titre d'exemple, on peut citer les éthers, les cétones, les alcools et de préférence les esters et les solvants aromatiques, habituellement employés comme solvants.

Le dépôt du revêtement superficiel peut s'effectuer dès que le primaire d'adhérence appliqué sur le substrat constitue un film sec au toucher.

L'expression "sec au toucher" signifie qu'une partie au moins des solvants a été éliminée pour l'obtention du primaire sous forme de film sec au toucher. On peut procéder par simple séchage à l'air ambiant. On peut également prévoir une installation permettant une élimination plus rapide des solvants.

Le primaire d'adhérence selon l'invention peut également être appliqué sous forme de poudre sur le substrat métallique. L'application de la composition en poudre peut s'effectuer selon les techniques d'application habituellement mises en oeuvre.

Les différents constituants du primaire d'adhérence, préalablement broyés à une granulométrie qui peut être avantageusement comprise entre 15 et 40 µm, peuvent être mélangés à sec. Ce mélange à sec ou dry-blend ne nécessite pas d'appareillage spécial et peut s'effectuer à température ambiante.

Le broyage des poudres peut s'effectuer dans des appareils refroidis cryogéniquement ou à forte absorption d'air (broyeurs à couteaux, à marteaux, à disques ...). Les particules de poudre obtenues sont sélectées sur des appareils appropriés pour éliminer des tranches granulométriques non souhaitées : par exemple des grains trop gros et/ou trop fins.

Le primaire en poudre peut également être obtenu par malaxage à l'état fondu de ses divers constituants dans un malaxeur de type approprié. La température de malaxage peut être comprise entre 80 et 180°C, et de préférence entre 90 et 110°C.

Ce mélange ainsi obtenu se présente, en général, sous forme de granulés que l'on broie selon les techniques habituelles telles que définies plus haut à une granulométrie avantageusement comprise entre 15 et 40 µm.

Parmi les techniques d'application de poudre, on peut citer la projection électrostatique, technique particulièrement préférée pour réaliser le revêtement de substrats métalliques selon l'invention, le trempage en lit fluidisé.

En projection électrostatique, la poudre est introduite dans un pistolet où elle est véhiculée par de l'air comprimé et passe dans une buse portée à un potentiel élevé généralement compris entre une dizaine et une centaine de kilovolts.

La tension appliquée peut être de polarité positive ou négative.

Le débit de la poudre dans le pistolet est généralement compris entre 10 et 200 g/mn, et de préférence entre 50 et 120 g/mn.

Lors de son passage dans la buse, la poudre se charge d'une certaine quantité d'électricité, les particules de poudres véhiculées par l'air comprimé viennent s'appliquer sur la surface métallique à revêtir, ladite surface étant elle-même reliée à la terre c'est-à-dire à un potentiel électrique nul. Les particules de poudre sont retenues sur cette surface par leur charge électrostatique et les forces d'attraction électrostatiques sont suffisantes pour que l'objet poudré puisse être non seulement revêtu de poudre mais également déplacé et chauffé dans un four à une température qui provoque la fusion ou la réticulation des poudres de revêtement.

La polarité de la charge électrostatique à laquelle on porte la poudre peut être, comme on le voit ci-dessus, positive ou négative. On la choisit en fonction de la nature de la poudre que l'on désire appliquer, qui peut donner de bons résultats avec une polarité d'un certain signe et des résultats moins bons, voir nuls quand la polarité est de signe opposé.

En général, le primaire d'adhérence selon l'invention peut être appliqué indifféremment en polarité positive ou négative.

On peut choisir la température du substrat métallique entre 20 et 200°C.

Lors de la projection électrostatique du primaire, une température élevée du substrat, outre qu'elle favorise son adhérence, permet simultanément sa fusion.

L'épaisseur du primaire déposé par projection peut être avantageusement comprise entre 3 et 40 $\mu m$, et de préférence entre 8 et 25 $\mu m$.

Dans le cas du procédé de trempage en lit fluidisé, le substrat métallique à revêtir, soigneusement préparé, en subissant par exemple un ou plusieurs traitements de surface énumérés ci-dessus, est chauffé dans un four à une température déterminée suivant notamment la nature dudit substrat, sa forme et l'épaisseur de revêtement désirée. Le substrat ainsi chauffé est ensuite plongé dans une composition de poudre selon l'invention maintenue en suspension par un gaz en circula tion dans une cuve à fond poreux. La poudre fond au contact des surfaces métalliques chaudes et forme ainsi un dépôt dont l'épaisseur est fonction de la température du substrat et de sa durée d'immersion dans la poudre. L'épaisseur du primaire déposé par trempage est en général comprise entre 250 et 500 $\mu m$, et de préférence entre 350 et 400 $\mu m$.

Le revêtement superficiel fluoré est avantageusement appliqué sous forme de particules, sur le substrat métallique portant le primaire. La taille moyenne des grains ou particules constituant le revêtement superficiel peut être comprise entre 20 et 60 $\mu m$ et de préférence entre 20 et 60 $\mu m$ ; ces valeurs ne doivent être considérées que comme des ordres de grandeur.

Ces poudres peuvent être obtenues selon des techniques maintenant bien connues telles que le broyage des granulés, la solubilisation du polymère puis la précipitation à froid dans un solvant ou dans un non-solvant, ou encore en utilisant directement des procédés de polymérisation de ou des monomères dans des solvants dans lesquels le polymère se sépare sous forme de poudre.

La poudre de revêtement superficiel peut être appliquée par voie pneumatique ou par voie électrostatique, cette opération pouvant être réalisée à température ambiante.

Le dépôt de la poudre de revêtement superficiel peut être effectué en une ou plusieurs couches dont l'épaisseur totale peut être comprise entre 80 et 300 $\mu m$, et de préférence entre 100 et 250 $\mu m$. Il est suivi d'un chauffage du substrat ainsi revêtu à une température permettant simultanément l'élimination des solvants ou diluants résiduels du primaire, éventuellement le durcissement et la réticulation de ce dernier, la fusion du revêtement superficiel en une couche continue, qui se durcit par refroidissement, par exemple à l'air ou par immersion dans l'eau ou tout autre liquide approprié. Le revêtement superficiel fluoré peut être également mis en oeuvre en solution dans un solvant vrai, ou en suspension dans un solvant latent.

D'une manière générale, ce chauffage s'effectue à une température pouvant être comprise entre 140 et 300°C, suivant notamment la nature du revêtement superficiel mis en oeuvre.

La durée du séjour à cette température est de l'ordre de quelques minutes, par exemple de 1 à 10 mn.

Les exemples suivants illustrent l'invention sans toutefois la limiter.

N.B Pour tous les exemples ci-après, la masse indiquée pour les composés en solution ou en suspension (résine méthacrylique, résine époxyde, résine phénolique éthérifiée) correspond à la masse totale de la solution contenant ledit composé.

## EXEMPLE 1

### A - CONSTITUANTS

1°) Le substrat métallique est constitué par une plaque d'acier de 1 mm d'épaisseur. Cette plaque a préalablement subi un dégraissage puis un grenaillage.

2°) La composition de primaire comprend (en grammes) :

| | |
|---|---|
| - résine méthacrylique ($T_v$ = 60°C ; dureté Tukon = 15-16) en solution dans le xylène (concentration : 40 % en poids) | 1,95 |
| - résine époxyde (masse moléculaire = 2900 ; poids d'équivalent époxy : 1500 à 2000) en solution dans l'acétate d'éthoxy-2 éthyle (concentration : 50 % en poids) | 27,85 |
| - résine époxyde (masse moléculaire = 380 ; poids d'équivalent époxy : 180-200) | 3,18 |
| - résine phénolique éthérifiée (viscosité dynamique : 0,25 à 0,5 Pa.s) en solution dans un mélange composé de 2/3 en poids de xylène et de 1/3 de n-butanol (concentration : 57 % en poids) | 2,71 |
| - composés isocyanates (isocyanates aliphatiques bloqués à teneur en $-N=C=O$ égale à 11,5 % ; viscosité dynamique comprise entre 7 et 13 Pa.s) | 1,08 |
| - dioxyde de titane | 21,68 |
| - chromate de strontium | 2,17 |
| - silice | 0,22 |
| - acétate d'éthoxy-2 éthyle | 14,41 |
| - xyléne | 8,25 |
| - acétate de butyle | 16,50 |

3°) Le revêtement superficiel est constitué par du PVDF sous forme de poudre de granulométrie moyenne comprise entre 30 et 40 μm, de Melt Flow Index (MFI) compris entre 10 et 20 g/10mn mesuré selon la norme ISO 1133.

B - MISE EN OEUVRE

1°) On prépare le primaire en solution en mélangeant tout d'abord une partie des résines époxydes et méthacryliques en solution dans de l'acétate d'éthoxy-2 éthyle. Puis on disperse le ou les pigments dans ce mélange avant d'incorporer le reste des résines époxydes et méthacryliques et leurs agents de durcissement ou de réticulation.

L'ensemble est encore dilué afin d'obtenir un produit applicable à l'aide d'un pistolet pneumatique.

La composition du primaire ainsi réalisée est déposée par projection pneumatique sur le substrat au moyen d'un pistolet pneumatique.

2°) On laisse sécher la plaque quelques minutes à l'air ambiant.

Lorsque la plaque ainsi enduite est sèche au toucher, elle reçoit par projection électrostatique (charge électrostatique négative de 20 à 50 kV, surface métallique à potentiel 0), un dépôt de poudre de PVDF.

3°) L'ensemble passe dans un four maintenu à 250°C où il séjourne 5 mn, puis est retiré du four et se refroidit à l'air.

C - CARACTERISTIQUES DU MATERIAU

1°) Le matériau est un composite comprenant successivement :
- une plaque d'acier (épaisseur 1 mm)
- une couche de primaire d'épaisseur égale à environ 12 $\mu$m
- une couche de PVDF (épaisseur 180 $\mu$m)

2°) Le matériau décrit en C.1°) subit un test d'adhérence réalisé selon la norme NF T 58-112.

Le résultat est noté dans le tableau I.

Le matériau décrit en C.1°) subit un test de vieillissement au brouillard salin réalisé selon la norme ASTM B 117-73.

Les résultats après 500 heures d'essai sont notés dans le tableau I.

EXEMPLE 2

A - On renouvelle l'essai de l'exemple 1 en utilisant une composition de primaire comprenant (en grammes) :

| | |
|---|---|
| - résine méthacrylique ($T_v$ = 60°C ; dureté Tukon = 15-16) en solution dans le xylène (concentration : 40 % en poids) | 11,26 |
| - résine époxyde (masse moléculaire = 2900 ; poids d'équivalent époxy : 1500 à 2000) en solution dans l'acétate d,éthoxy-2 éthyle (concentration : 50 % en poids) | 22,74 |
| - résine époxyde (masse moléculaire = 380 ; poids d'équivalent époxy : 180-200) | 3,04 |
| - résine phénolique éthérifiée (viscosité dynamique : 0,25 à 0,5 Pa.s) en solution dans un mélange composé de 2/3 en poids de xylène et de 1/3 n-butanol (concentration : 57 % en poids) | 2,20 |
| - composés isocyanates (isocyanates aliphatiques bloqués à teneur en -N=C=O égale à 11,5 % ; viscosité dyanamique comprise entre 7 et 13 Pa.s) | 1,11 |
| - dioxyde de titane | 22,30 |
| - chromate de strontium | 2,21 |
| - silice | 0,22 |
| - acétate d'éthoxy-2 éthyle | 13,53 |
| - xylène | 7,13 |
| - acétate de butyle | 14,26 |

et un revêtement superficiel en PVDF dont les caractéristiques sont les mêmes que celles décrites en 1.A.3°).

On réalise ainsi un matériau composite comprenant successivement :

- une plaque d'acier (épaisseur 1 mm)
- une couche de primaire d'épaisseur égale à environ 12 μm,
- une couche de PVDF (épaisseur 180 μm)

Le matériau décrit ci-dessus subit un test d'adhérence réalisé selon la norme NF T 58-112.

Le matériau décrit ci-dessus subit un test de vieillissement au brouillard salin réalisé selon la norme ASTM B 117-73.

Les résultats sont réunis dans le tableau I.

B - On renouvelle l'essai de l'exemple 1 en utilisant la même composition de primaire qu'en 2.A.

On réalise un matériau composite comprenant successivement :

- une plaque d'aluminium chromaté (épaisseur 0,7 mm)
- une couche de primaire d'épaisseur égale à environ 12 μm,
- une couche de PVDF (épaisseur 120 μm)

Le matériau décrit ci-dessus subit un test d'adhérence réalisé selon la norme NF T 58-112.

Le matériau décrit ci-dessus subit un test de vieillissement au brouillard salin réalisé selon la norme ASTM B 117-73.

Les résultats sont réunis dans le tableau I.

C - On renouvelle l'essai de l'exemple 1 en utilisant la même composition de primaire qu'en 2.A.

On réalise un matériau composite comprenant successivement :

- une plaque d'acier phosphaté fer (épaisseur 1 mm)
- une couche de primaire d'épaisseur égale à environ 12 μm,
- une couche de PVDF (épaisseur 120 μm)

Le matériau décrit ci-dessus subit un test d'adhérence réalisé selon la norme NF T 58-112.

Le matériau décrit ci-dessus subit un test de vieillissement au brouillard salin réalisé selon la norme ASTM B 117-73.

Les résultats sont réunis dans le tableau I.

D - On renouvelle l'essai de l'exemple 1 en utilisant la même composition de primaire qu'en 2.A.

On réalise un matériau composite comprenant successivement :

- une plaque d'acier phosphaté zinc (épaisseur 1 mm)
- une couche de primaire d'épaisseur égale à environ 12 μm,
- une couche de PVDF (épaisseur 120 μm)

Le matériau décrit ci-dessus subit un test d'adhérence réalisé selon la norme NF T 58-112.

Le matériau décrit ci-dessus subit un test de vieillissement au brouillard salin réalisé selon la norme ASTM B 117-73.

Les résultats sont réunis dans le tableau I.

EXEMPLE 3

On renouvelle l'essai de l'exemple 1 en utilisant une composition de primaire comprenant (en grammes) :

8

| | |
|---|---|
| - résine méthacrylique (T$_v$ = 60°C ; dureté Tukon = 15-16) en solution dans le xylène (concentration : 40 % en poids) | 20,10 |
| - résine époxyde (masse moléculaire = 2900 ; poids d'équivalent époxy : 1500 à 2000) en solution dans l'acétate d'éthoxy-2 éthyle (concentration : 50 % en poids) | 13,50 |
| - résine époxyde (masse moléculaire = 380 ; poids d'équivalent époxy : 180-200) | 2,92 |
| - résine phénolique éthérifiée (viscosité dynamique : 0,25 à 0,5 Pa.s) en solution dans un mélange composé de 2/3 en poids de xylène et de 1/3 de n-butanol (concentration : 57 % en poids) | 1,30 |
| - composés isocyanates (isocyanates aliphatiques bloqués à teneur en -N=C=O égale à 11,5 % ; viscosité dynamique comprise entre 7 et 13 Pa.s) | 1,00 |
| - dioxyde de titane | 20,00 |
| - chromate de strontium | 2,00 |
| - silice | 0,20 |
| - acétate d'éthoxy-2 éthyle | 14,02 |
| - xylène | 8,32 |
| - acétate de butyle | 16,64 |

et un revêtement superficiel en PVDF dont les caractéristiques sont les mêmes que celles décrites en 1.A.3°).

On réalise ainsi un matériau composite comprenant successivement :
- une plaque d'acier (épaisseur 1 mm)
- une couche de primaire d'épaisseur égale à environ 12 μm,
- une couche de PVDF (épaisseur 180 μm)

Le matériau décrit ci-dessus subit un test d'adhérence réalisé selon la norme NF T 58-112.

Le matériau décrit ci-dessus subit un test de vieillissement au brouillard salin réalisé selon la norme ASTM B 117-73.

Les résultats sont réunis dans le tableau I.


EXEMPLE 4

On renouvelle l'essai de l'exemple 1 en utilisant une composition de primaire comprenant (en grammes) :

9

| | |
|---|---|
| - résine méthacrylique (T$_v$ = 60°C ; dureté Tukon = 15-16) en solution dans le xylène (concentration : 40 % en poids) | 33,23 |
| - résine époxyde (masse moléculaire = 2900 ; poids d'équivalent époxy : 1500 à 2000) en solution dans l'acétate d'éthoxy-2 éthyle (concentration : 50 % en poids) | 7,43 |
| - résine époxyde (masse moléculaire = 380 ; poids d'équivalent époxy : 180-200) | 0,32 |
| - résine phénolique éthérifiée (viscosité dynamique : 0,25 à 0,5 Pa.s) en solution dans un mélange composé de 2/3 en poids de xylène et de 1/3 de n-butanol (concentration : 57 % en poids) | 0,70 |
| - composés isocyanates (isocyanates aliphatiques bloqués à teneur en -N=C=O égale à 11,5 % ; viscosité dynamique comprise entre 7 et 13 Pa.s) | 0,11 |
| - dioxyde de titane | 17,95 |
| - chromate de strontium | 1,99 |
| - silice | 0,20 |
| - acétate d'éthoxy-2 éthyle | 10,86 |
| - xylène | 9,07 |
| - acétate de butyle | 18,14 |

et un revêtement superficiel en PVDF dont les caractéristiques sont les mêmes que celles décrites en 1.A.3°).

On réalise ainsi un matériau composite comprenant successivement :
- une plaque d'acier (épaisseur 1 mm)
- une couche de primaire d'épaisseur égale à environ 12 μm,
- une couche de PVDF (épaisseur 180 μm)

Le matériau décrit ci-dessus subit un test d'adhérence réalisé selon la norme NF T 58-112.

Le matériau décrit ci-dessus subit un test de vieillissement au brouillard salin réalisé selon la norme ASTM B 117-73.

Les résultats sont réunis dans le tableau I.

EXEMPLE 5

On renouvelle l'essai de l'exemple 1 en utilisant une composition de primaire comprenant (en grammes) :

| | |
|---|---|
| - résine méthacrylique (T$_v$= 60°C ; dureté Tukon = 15-16) en solution dans le xylène (concentration : 40 % en poids) | 38,48 |
| - résine époxyde (masse moléculaire = 2900 ; poids d'équivalent époxy : 1500 à 2000) en solution dans l'acétate d'éthoxy-2 éthyle (concentration : 50 % en poids) | 2,87 |
| - résine époxyde (masse moléculaire = 380 ; poids d'équivalent époxy : 180-200) | 0,62 |
| - résine phénolique éthérifiée (viscosité dynamique : 0,25 à 0,5 Pa.s) en solution dans un mélange composé de 2/3 en poids de xylène et de 1/3 de n-butanol (concentration : 57 % en poids) | 0,27 |
| - composés isocyanates (isocyanates aliphatiques bloqués à teneur en -N=C=O égale à 11,5 % ; viscosité dynamique comprise entre 7 et 13 Pa.s) | 0,21 |
| - dioxyde de titane | 17,75 |
| - chromate de strontium | 1,97 |
| - silice | 0,20 |
| - acétate d'éthoxy-2 éthyle | 10,75 |
| - xylène | 8,96 |
| - acétate de butyle | 17,92 |

et un revêtement superficiel en PVDF dont les caractéristiques sont les mêmes que celles décrites en 1.A.3°).

On réalise ainsi un matériau composite comprenant successivement :
- une plaque d'acier (épaisseur 1 mm)
- une couche de primaire d'épaisseur égale à environ 12 μm,
- une couche de PVDF (épaisseur 180 μm)

Le matériau décrit ci-dessus subit un test d'adhérence réalisé selon la norme NF T 58-112.

Le matériau décrit ci-dessus subit un test de vieillissement au brouillard salin réalisé selon la norme ASTM B 117-73.

Les résultats sont réunis dans le tableau I.

EXEMPLE 6

On renouvelle l'essai de l'exemple 1 en utilisant une composition de primaire comprenant (en grammes) :

11

| | |
|---|---|
| - résine méthacrylique (T$_v$= 60°C ; dureté Tukon = 15-16) en solution dans le xylène (concentration : 40 % en poids) | 41,10 |
| - résine époxyde (masse moléculaire = 2900 ; poids d'équivalent époxy : 1500 à 2000) en solution dans l'acétate d'éthoxy-2 éthyle (concentration : 50 % en poids) | 1,45 |
| - résine époxyde (masse moléculaire = 380 ; poids d'équivalent époxy : 180-200) | 0,31 |
| - résine phénolique éthérifiée (viscosité dynamique : 0,25 à 0,5 Pa.s) en solution dans un mélange composé de 2/3 en poids de xylène et de 1/3 de n-butanol (concentration : 57 % en poids) | 0,14 |
| - composés isocyanates (isocyanates aliphatiques bloqués à teneur en -N=C=O égale à 11,5 % ; viscosité dynamique comprise entre 7 et 13 Pa.s) | 0,11 |
| - dioxyde de titane | 17,54 |
| - chromate de strontium | 1,95 |
| - silice | 0,20 |
| - acétate d'éthoxy-2 éthyle | 10,62 |
| - xylène | 8,86 |
| - acétate de butyle | 17,72 |

et un revêtement superficiel en PVDF dont les caractéristiques sont les mêmes que celles décrites en 1.A.3°).

On réalise ainsi un matériau composite comprenant successivement :
- une plaque d'acier (épaisseur 1 mm)
- une couche de primaire d'épaisseur égale à environ 12 μm,
- une couche de PVDF (épaisseur 180 μm)

Le matériau décrit ci-dessus subit un test d'adhérence réalisé selon la norme NF T 58-112.

Le matériau décrit ci-dessus subit un test de vieillissement au brouillard salin réalisé selon la norme ASTM B 117-73.

Les résultats sont réunis dans le tableau I.

EXEMPLE 7

On réalise un essai comparatif en réalisant un primaire ne comportant que 1 % de résine méthacrylique. La composition de primaire comprend (en grammes) :

| | |
|---|---|
| - résine méthacrylique ($T_v = 60°C$ ; dureté Tukon = 15-16) en solution dans le xylène (concentration : 40 % en poids) | 0,43 |
| - résine époxyde (masse moléculaire = 2900 ; poids équivalent époxy : 1500 à 2000) en solution dans l'acétate d'éthoxy-2 éthyle (concentration : 50 % en poids) | 28,46 |
| - résine époxyde (masse moléculaire = 380 ; poids d'équivalent époxy : 180-200) | 2,59 |
| - résine phénolique éthérifiée (viscosité dynamique : 0,25 à 0,5 Pa.s) en solution dans un mélange composé de 2/3 en poids de xylène et de 1/3 de n-butanol (concentration : 57 % en poids) | 2,77 |
| - composés isocyanates (isocyanates aliphatiques bloqués à teneur en -N=C=O égale à 11,5 % ; viscosité dynamique comprise entre 7 et 13 Pa.s) | 1,06 |
| - dioxyde de titane | 21,27 |
| - chromate de strontium | 2,13 |
| - silice | 0,21 |
| - acétate d'éthoxy-2 éthyle | 14,82 |
| - xylène | 8,76 |
| - acétate de butyle | 17,50 |

et un revêtement superficiel en PVDF dont les caractéristiques sont les mêmes que celles décrites en 1.A.3°).

On réalise ainsi un matériau composite comprenant successivement :
- une plaque d'acier (épaisseur 1 mm)
- une couche de primaire d'épaisseur égale à environ 12 μm,
- une couche de PVDF (épaisseur 180 μm)

Le matériau décrit ci-dessus subit un test d'adhérence réalisé selon la norme NF T 58-112.

Le matériau décrit ci-dessus subit un test de vieillissement au brouillard salin réalisé selon la norme ASTM B 117-73.

Les résultats sont réunis dans le tableau I.

EXEMPLE 8 (COMPARATIF)

On renouvelle l'essai de l'exemple 1 mais avec une composition de primaire qui ne contient pas de résine méthacrylique.

La composition de primaire comprend (en grammes) :

| | |
|---|---|
| - résine méthacrylique | 0,00 |
| - résine époxyde (masse moléculaire = 2900 ; poids d'équivalent époxy : 1500 à 2000) en solution dans l'acétate d'éthoxy-2 éthyle (concentration : 50 % en poids) | 29,60 |
| - résine époxyde (masse moléculaire = 380 ; poids d'équivalent époxy : 180-200) | 3,78 |
| - résine phénolique éthérifiée (viscosité dynamique : 0,25 à 0,5 Pa.s) en solution dans un mélange composé de 2/3 en poids de xylène et de 1/3 de n-butanol (concentration : 57 % en poids) | 2,80 |
| - composés isocyanates (isocyanates aliphatiques bloqués à teneur en -N=C=O égale à 11,5 %, viscosité dynamique comprise entre 7 et 13 Pa.s) | 1,10 |
| - dioxyde de titane | 21,93 |
| - chromate de strontium | 2,93 |
| - silice | 0,22 |
| - acétate d'éthoxy-2 éthyle | 13,52 |
| - xylène | 8,04 |
| - acétate de butyle | 16,08 |

et un revêtement superficiel en PVDF dont les caractéristiques sont les mêmes que celles décrites en 1.A.3°).

On réalise ainsi un matériau composite comprenant successivement :
- une plaque d'acier (épaisseur 1 mm)
- une couche de primaire d'épaisseur égale à environ 12 μm,
- une couche de PVDF (épaisseur 180 μm)

Le matériau décrit ci-dessus subit un test d'adhérence réalisé selon la norme NF T 58-112.

Le matériau décrit ci-dessus subit un test de vieillissement au brouillard salin réalisé selon la norme ASTM B 117-73.

Les résultats sont réunis dans le tableau I.

EXEMPLE 9 (COMPARATIF)

On renouvelle l'essai de l'exemple 1 mais avec une composition de primaire qui ne contient pas de résine époxyde.

La composition de primaire comprend (en grammes) :

| | |
|---|---|
| - résine méthacrylique ($T_v=60°C$ ; dureté Tukon = 15-16) en solution dans le xylène (concentration : 40 % en poids) | 48,10 |
| - résine époxyde | 0,00 |
| - résine phénolique éthérifiée | 0,00 |
| - composés isocyanates | 0,00 |
| - dioxyde de titane | 19,26 |
| - chromate de strontium | 1,93 |
| - silice | 0,20 |
| - acétate d'éthoxy-2 éthyle | 11,61 |
| - xylène | 6,30 |
| - acétate de butyle | 12,60 |

et un revêtement superficiel en PVDF dont les caractéristiques sont les mêmes que celles décrites en 1.A.3°).

On réalise ainsi un matériau composite comprenant successivement :
- une plaque d'acier (épaisseur 1 mm)
- une couche de primaire d'épaisseur égale à environ 12 $\mu$m,
- une couche de PVDF (épaisseur 180 $\mu$m)

Le matériau décrit ci-dessus subit un test d'adhérence réalisé selon la norme NF T 58-112.

Le matériau décrit ci-dessus subit un test de vieillissement au brouillard salin réalisé selon la norme ASTM B 117-73.

Les résultats sont réunis dans le tableau I.

EXEMPLE 10

On renouvelle l'essai de l'exemple 1 en utilisant une composition de primaire comprenant (en grammes) :

| | |
|---|---|
| - résine méthacrylique (T$_v$ = 60°C ; dureté Tukon = 15-16) en solution dans le xylène (concentration : 40 % en poids) | 7,7 |
| - résine époxy-phénolique (à base de bisphénol A et d'épichlorhydrine, de masse moléculaire sensiblement égale à 2500) | 7,7 |
| - résine époxyde (masse moléculaire = 380 ; poids d'équivalent époxy : 180-200) | 2,6 |
| - résine phénolique éthérifiée (viscosité dynamique : 0,25 à 0,5 Pa.s) en solution dans un mélange composé de 2/3 en poids de xyléne et de 1/3 de n-butanol (concentration : 57 % en poids) | 1,5 |
| - composés isocyanates (isocyanates aliphatiques bloqués à teneur en -N=C=O égale à 11,5 % , viscosité dynamique comprise entre 7 et 13 Pa.s) | 0,8 |
| - dioxyde de titane | 15,3 |
| - chromate de strontium | 1,5 |
| - silice | 0,2 |
| - acétate d'éthoxy-2 éthyle | 14,6 |
| - xylène | 24,8 |
| - acétate de butyle | 10,2 |
| - isobutanol | 13,1 |

et un revêtement superficiel en PVDF dont les caractéristiques sont les mêmes que celles décrites en 1.A.3°).

On réalise ainsi un matériau composite comprenant successivement :

- une plaque d'acier (épaisseur 1 mm)
- une couche de primaire d'épaisseur égale à environ 12 μm,
- une couche de PVDF (épaisseur 180 μm)

Le matériau décrit ci-dessus subit un test d'adhérence réalisé selon la norme NF T 58-112.

Le matériau décrit ci-dessus subit un test de vieillissement au brouillard salin réalisé selon la norme ASTM B 117-73.

Les résultats sont réunis dans le tableau I.

EXEMPLE 11

On renouvelle l'essai de l'exemple 1 en utilisant une composition de primaire comprenant (en grammes) :

| | |
|---|---|
| - résine méthacrylique ($T_v = 60°C$ ; dureté Tukon = 15-16) en solution dans le xylène (concentration : 40 % en poids) | 15,90 |
| - résine époxy-phénolique (à base de bisphénol A et d'épichlorhydrine, de masse moléculaire sensiblement égale à 2500) | 5,30 |
| - résine époxyde (masse moléculaire = 380 ; poids d'équivalent époxy : 180-200) | 2,70 |
| - résine phénolique éthérifiée (viscosité dynamique : 0,25 à 0,5 Pa.s) en solution dans un mélange composé de 2/3 en poids de xylène et de 1/3 de n-butanol (concentration : 57 % en poids) | 1,00 |
| - composés isocyanates (isocyanates aliphatiques bloqués à teneur en -N=C=O égale à 11,5 % ; viscosité dynamique comprise entre 7 et 13 Pa.s | 0,80 |
| - dioxyde de titane | 15,60 |
| - chromate de strontium | 1,60 |
| - silice | 0,20 |
| - acétate d'éthoxy-2 éthyle | 14,70 |
| - xylène | 17,60 |
| - acétate de butyle | 12,30 |
| - isobutanol | 12,30 |

et un revêtement superficiel en PVDF dont les caractéristiques sont les mêmes que celles décrites en 1.A.3°).
On réalise ainsi un matériau composite comprenant successivement :
- une plaque d'acier (épaisseur 1 mm)
- une couche de primaire d'épaisseur égale à environ 12 $\mu$m,
- une couche de PVDF (épaisseur 180 $\mu$m)
Le matériau décrit ci-dessus subit un test d'adhérence réalisé selon la norme NF T 58-112.
Le matériau décrit ci-dessus subit un test de vieillissement au brouillard salin réalisé selon la norme ASTM B 117-73. Les résultats sont réunis dans le tableau I.

EXEMPLE 12 (COMPARATIF)
On renouvelle l'essai de l'exemple 1 avec une composition de primaire qui ne contient pas de résine méthacrylique, mais contenant du PVDF.
La composition de primaire comprend (en grammes) :

17

| | |
|---|---|
| - résine méthacrylique | 0,00 |
| - résine époxyde (masse moléculaire = 2900 ; poids d'équivalent époxy : 1500 à 2000) en solution dans l'acétate d'éthoxy-2 éthyle (concentration : 50 % en poids) | 10,09 |
| - résine époxyde (masse moléculaire = 380 ; poids d'équivalent époxy : 180-200) | 2,47 |
| - résine phénolique éthérifiée (viscosité dynamique : 0,25 à 0,5 Pa.s) en solution dans un mélange composé de 2/3 en poids de xylène et de 1/3 de n-butanol (concentration : 57 % en poids) | 1,96 |
| - composés isocyanates (isocyanates aliphatiques bloqués à teneur en -N=C=O égale à 11,5 % ; viscosité dynamique comprise entre 7 et 13 Pa.s) | 0,72 |
| - dioxyde de titane | 14,95 |
| - chromate de strontium | 1,54 |
| - silice | 0,21 |
| - acétate d'éthoxy-2 éthyle | 28,73 |
| - xylène | 28,73 |
| - acétate de butyle | 9,88 |
| - PVDF de granulation moyenne égale à 3 μm et de MFI compris entre 1,7 et 2,3 g/10 mn (mesuré selon la norme ISO 1133) | 0,72 |

et un revêtement superficiel en PVDF dont les caractéristiques sont les mêmes que celles décrites en 1.A.3°).

On réalise ainsi un matériau composite comprenant successivement :
- une plaque d'acier (épaisseur 1 mm)
- une couche de primaire d'épaisseur égale à environ 12 μm,
- une couche de PVDF (épaisseur 180 μm)

Le matériau décrit ci-dessus subit un test d'adhérence réalisé selon la norme NF T 58-112.

Le matériau décrit ci-dessus subit un test de vieillissement au brouillard salin réalisé selon la norme ASTM B 117-73.

Les résultats sont réunis dans le tableau I.

EXEMPLE 13

A - CONSTITUANTS

1°) Le substrat métallique est constitué par une plaque d'acier de 1 mm d'épaisseur. Cette plaque a préalablement subi un dégraissage puis un grenaillage.

2°) La composition de primaire comprend (en grammes) :

| | |
|---|---|
| - résine méthacrylique (T$_v$= 60°C ; dureté Tukon = 15-16) | 19,29 |
| - résine époxyde (masse moléculaire = 1000 ; poids d'équivalent époxy : 480) | 77,14 |
| - dicyandiamide | 3,47 |
| - alumine | 0,10 |

3°) Le revêtement superficiel est constitué par du PVDF sous forme de poudre de granulométrie moyenne comprise entre 30 et 40 µm, de Melt Flow Index (MFI) compris entre 10 et 20 g/10mn mesuré selon la norme ISO 1133.

B - MISE EN OEUVRE

1°) On mélange à sec les composants du primaire tels que définis en A.2°) préalablement broyés à une granulométrie comprise entre 20 et 40 µm. La composition en poudre ainsi obtenue est déposée à température ambiante sur la plaque d'acier telle que définie en A.1°) par projection électrostatique sous charge électrostatique négative de 20 kV, la surface métallique étant à potentiel 0.

2°) Le substrat ainsi revêtu de primaire passe dans un four maintenu à 250°C où il séjourne 1 mn puis est retiré du four et refroidit à l'air.

On dépose ensuite le revêtement superficiel en PVDF décrit en A.3°) par projection électrostatique (charge électrostatique négative de 20 à 50 kV, surface métallique à potentiel 0).

3°) L'ensemble passe dans un four maintenu à 250°C où il séjourne 5 mn, puis est retiré du four et se refroidit à l'air.

C - CARACTERISTIQUES DU MATERIAU

1°) Le matériau est un composite comprenant successivement :
- une plaque d'acier (épaisseur 1 mm)
- une couche de primaire d'épaisseur égale à environ 20 µm
- une couche de PVDF (épaisseur 150 µm)

2°) Le matériau décrit en C.1°) subit un test d'adhérence réalisé selon la norme NF T 58-112.
Le résultat est noté dans le Tableau I.
Le matériau décrit en C.1°) subit un test de vieillissement au brouillard salin réalisé selon la norme ASTM B 117-73.
Les résultats après 500 heures d'essai sont notés dans le Tableau I.

EXEMPLE 14

On renouvelle l'essai de l'exemple 13 en utilisant une composition de primaire comprenant (en grammes) :

| | |
|---|---|
| - résine méthacrylique (T$_v$ = 60°C ; dureté Tukon : 15-16) | 4,60 |
| - résine époxyde (masse moléculaire = 1000 ; poids d'équivalent époxy = 480) | 92,08 |
| - dicyandiamide | 3,22 |
| - alumine | 0,10 |

que l'on dépose par projection électrostatique négative de 15 kV, la surface métallique étant à potentiel 0.
Un revêtement superficiel en PVDF dont les caractéristiques sont identiques à celles décrites dans l'EXEMPLE 1 est appliqué par projection électrostatique dans les mêmes conditions que dans l'exemple 1

19

après cuisson intermédiaire du primaire à 250°C, pendant 1 mn.

On réalise ainsi un matériau composite comprenant successivement :
- une plaque d'acier (épaisseur 1 mm)
- une couche de primaire d'épaisseur égale à environ 17 μm
- une couche de PVDF (épaisseur 143 μm)

Le matériau décrit ci-dessus subit un test d'adhérence réalisé selon la norme NF T 58-112 ainsi qu'un test de vieillissement du brouillard salin réalisé selon la norme ASTM B 117-73.

Les résultats sont réunis dans le Tableau I.

EXEMPLE 15

On renouvelle l'essai de l'exemple 13 en utilisant une composition de primaire comprenant (en grammes) :

| | |
|---|---|
| - résine méthacrylique (T$_v$ = 60°C ; dureté Tukon = 15-16) | 19,03 |
| - résine époxyde (masse moléculaire = 1000 ; poids d'équivalent époxy = 480) | 38,07 |
| - résine phénolique (melt index compris entre 4 et 8 mesuré à 220°C sous 44 psi) | 38,07 |
| - dicyandiamide | 1,52 |
| - chromate de zinc | 0,27 |
| - dioxyde de titane | 3,04 |

que l'on dépose par projection électrostatique négative de 25 kV, la surface métallique étant à potentiel 0.

Le revêtement superficiel en PVDF dont les caractéristiques sont identiques à celles décrites dans l'EXEMPLE 1 est appliqué par projection électrostatique dans les mêmes conditions que dans l'exemple 1 après cuisson intermédiaire du primaire à 250°C pendant 1 mn.

On réalise ainsi un matériau composite comprenant successivement :
- une plaque d'acier (épaisseur 1 mm)
- une couche de primaire d'épaisseur égale à environ 27 μm
- une couche de PVDF (épaisseur 173 μm)

Le matériau décrit ci-dessus subit un test d'adhérence réalisé selon la norme NF T 58-112 ainsi qu'un test de vieillissement au brouillard salin réalisé selon la norme ASTM B 117-73.

Les résultats obtenus sont réunis dans le Tableau I.

20

EP 0 354 822 A1

TABLEAU I

| N°EX. | Résine(s) métha-<br>Résine(s) métha- +<br>époxy(phénoliques)<br>en % | Substrat<br>métallique | Adhérence<br>initiale<br><br>(NFT 58-112) | Adhérence après<br>500h de brouil-<br>lard salin<br>(ASTM B 117-73) |
|---|---|---|---|---|
| 1 | 4,4 | acier | Classe 4<br>très bonne | Classe 4<br>très bonne |
| 2-A<br>2-B<br>2-C<br><br>2-D | 23,8 | acier<br>aluminium<br>acier phos-<br>phaté fer<br>acier phos-<br>phaté zinc | Classe 4<br>très bonne | Classe 4<br>très bonne |
| 3 | 45,4 | acier | Classe 4<br>très bonne | Classe 4<br>très bonne |
| 4 | 76,7 | acier | Classe 4<br>très bonne | Classe 4<br>très bonne |
| 5 | 88,2 | acier | Classe 3-4<br>bonne | Classe 3<br>moyenne/bonne |
| 6 | 94,1 | acier | Classe 2-3<br>moyenne | Classe 1-2<br>assez moyenne |
| 7 | 1 | acier | Classe 0<br>nulle | Classe 0<br>nulle |
| 8 | 0 | acier | Classe 0<br>nulle | Classe 0<br>nulle |
| 9 | 100 | acier | Classe 1<br>faible | Classe 0<br>nulle |
| 10 | 23 | acier | Classe 4<br>très bonne | Classe 4<br>très bonne |
| 11 | 44,3 | acier | Classe 4<br>très bonne | Classe 4<br>très bonne |
| 12 | $\dfrac{PVDF}{PVDF + \text{résine époxy}} = 8,7$ | acier | Classe 0<br>nulle | Classe 0<br>nulle |

21

| N°EX. | Résine(s) métha-<br>Résine(s) métha- +<br>époxy(phénoliques)<br>en % | Substrat métallique | Adhérence initiale<br><br>(NFT 58-112) | Adhérence après 500h de brouil-lard salin<br><br>(ASTM B 117-73) |
|---|---|---|---|---|
| 13 | 20 | acier | Classe 4<br>très bonne | Classe 4<br>très bonne |
| 14 | 4,7 | acier | Classe 4<br>très bonne | Classe 4<br>très bonne |
| 15 | 20 | acier | Classe 4<br>très bonne | Classe 4<br>très bonne |

N.B Rapports calculés en prenant en compte les extraits secs des résines.

## Revendications

1. Primaire d'adhérence pour revêtement fluoré permettant l'adhérence dudit revêtement sur un substrat métallique, caractérisé en ce qu'il est constitué essentiellement de :
- une ou plusieurs résines époxydes et/ou époxy-phénoliques
- de résine(s) méthacrylique(s) thermoplastique(s).

2. Primaire d'adhérence selon la revendication 1, caractérisé en ce que le rapport pondéral de résine(s) méthacrylique(s) au mélange de résines époxy-(phénolique(s)) et méthacrylique(s) est compris entre 2 et 95 %, et de préférence entre 3 et 25 %.

3. Primaire d'adhérence selon les revendications 1 ou 2, caractérisé en ce qu'il comprend des charges et/ou des pigments et/ou des durcisseurs ou agents de réticulation des résines époxydes et méthacryliques.

4. Matériau composite comprenant un substrat métallique et un revêtement fluoré, caractérisé en ce qu'il comprend successivement :
- un substrat métallique
- une ou plusieurs couches de primaire tel que défini dans les revendications 1 à 3, d'épaisseur totale comprise entre 3 et 40 μm ou entre 250 et 500 μm,
- une ou plusieurs couches de revêtement fluoré à d'épaisseur totale comprise entre 80 et 300 μm

5. Procédé permettant de faire adhérer un revêtement fluoré, de préférence à base de PVDF, sur un substrat métallique caractérisé par les étapes suivantes :
a) on applique le primaire d'adhérence tel que défini dans les revendications 1 à 3 en solution ou en suspension, l'épaisseur du primaire étant de préférence comprise entre 8 et 25 μm.
b) quand le substrat ainsi revêtu est sec au toucher, on applique le revêtement fluoré, de préférence sous forme de poudre,
c) on chauffe le substrat métallique ainsi recouvert pour permettre la réticulation des résines du primaire d'adhérence et la filmification du revêtement fluoré en couche continue.

6. Procédé permettant de faire adhérer un revêtement fluoré, de préférence à base de PVDF, sur un substrat métallique caractérisé par les étapes suivantes :
a) on applique le primaire d'adhérence tel que défini dans les revendications 1 à 3 sous forme de poudre, de préférence par projection électrostatique ou par trempage en lit fluidisé, l'épaisseur du primaire étant de préférence comprise entre 8 et 25 μm,
b) sur le substrat ainsi revêtu, on applique ensuite le revêtement fluoré, de préférence sous forme de poudre,
c) on chauffe le substrat métallique ainsi recouvert pour permettre la réticulation des résines du primaire d'adhérence et la filmification du revêtement fluoré en couche continue.

Office européen
des brevets

**RAPPORT DE RECHERCHE EUROPEENNE**

Numero de la demande

EP 89 40 1736

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 253 191 (DAIKIN KOGYO CO., LTD) * Page 1; revendications * --- | 1-6 | C 09 D 163/00 C 09 D 133/10 C 09 D 5/00 B 05 D 5/08 |
| A | US-A-4 743 492 (J.D.C. WILSON, II) * Résumé; exemple 2 * --- | 1-6 | |
| A | CHEMICAL ABSTRACTS, vol. 79, no. 20, 19 novembre 1973, page 41, résumé no. 116427e, Columbus, Ohio, US; & JP-A-73 51 927 (TEIJIN LTD) 21-07-1973 * Résumé * ----- | 1-6 | |

DOMAINES TECHNIQUES
RECHERCHES (Int. Cl.5)

C 09 D
B 05 D

Le présent rapport a été établi pour toutes les revendications

| Lieu de la recherche | Date d'achèvement de la recherche | Examinateur |
|---|---|---|
| LA HAYE | 04-09-1989 | PRAS J-L.C.N. |